# FASCICULE DE BREVET EUROPEEN

(11) **EP 3 854 624 B1**
(45) Date de publication et mention de la délivrance du brevet: **25.09.2024**
(21) Numéro de dépôt: 21153520.8
(22) Date de dépôt: 26.01.2021
(51) Int. Cl.: B60L 3/12, B60L 9/00, B60L 13/00, B61L 27/53, B61L 27/57, B60Q 1/00, G05B 19/00, G06F 16/9035, G07C 5/08, G08G 1/0967, B60M 3/00, B60M 3/02, B61L 15/00, B61L 27/00, G08G 1/01, G08G 1/00, H02J 13/00, G06N 3/08

(54) **PROCÉDÉ, ET SYSTÈME, DE MESURE DU COMPORTEMENT ÉNERGÉTIQUE D'UN RÉSEAU DE TRANSPORT, PROGRAMME D'ORDINATEUR ASSOCIÉ**
VERFAHREN UND SYSTEM ZUR MESSUNG DES ENERGIEVERHALTENS EINES TRANSPORTNETZWERKS, UND COMPUTERPROGRAMM
METHOD AND SYSTEM FOR MEASURING THE ENERGY BEHAVIOUR OF A TRANSPORT NETWORK, AND COMPUTER PROGRAM THEREFOR

(30) Priorité: 27.01.2020 FR 2000756
(43) Date de publication de la demande: 28.07.2021
(73) Titulaire: ALSTOM Holdings, 93400 Saint-Ouen-sur-Seine (FR)
(72) Inventeur: IORDACHE, Marius, 75019 PARIS (FR)
(74) Mandataire: Lavoix

(56) Documents cités:
- EP-A1- 2 505 416
- EP-A1- 3 352 327
- WO-A1-2014/009405
- DE-A1- 19 654 960
- FR-A1- 3 076 775
- US-A1- 2019 016 356

## Description

La présente invention concerne un procédé de mesure du comportement énergétique d'un réseau de transport comprenant un ensemble de sous-station(s) de fourniture d'énergie électrique et une flotte de véhicules alimentés électriquement par lesdites sous-stations, lesdits véhicules suivant des trajectoires prédéfinies et comprenant un bloc de capture de données environnementales comprenant au moins un capteur parmi un capteur de température, un capteur d'humidité et un capteur de CO₂, ledit procédé comprenant les étapes suivantes mises en oeuvre par un système électronique de mesure du comportement énergétique du réseau de transport comprenant une mémoire et un processeur :
- la collecte des données environnementales capturées par le(s) capteur(s) du bloc de capture pendant la circulation des véhicules sur leur trajectoire, les données environnementales étant associées chacune à leur temps de capture respectif;
- la collecte de données caractérisant un état dynamique des véhicules pendant leur circulation sur leur trajectoire ;
- la détermination de valeurs électriques de consommation des véhicules en des temps d'échantillonnage ;
- le calcul d'au moins un indicateur de performance énergétique du réseau en fonction desdites valeurs électriques déterminées.

Un tel procédé nécessite la mise en place de capteurs de tension ou de courant dans les sous-stations et dans les véhicules, ce qui occasionne une immobilisation des véhicules et une interruption de service, et donne lieu à des opérations de maintenance sur les capteurs.

US 2019 016356 A1 et EP 3 352 327 A1 et DE 196 54 960 A1 et WO 2014/009405 A1 décrivent des procédés de mesure du comportement énergétique d'un réseau de transport.

Par ailleurs, dans le cas des réseaux de transport ferroviaire par exemple qui peuvent s'étendre sur des dizaines, voire des centaines de km, il est complexe de mesurer l'interaction entre les sous-systèmes (matériels roulants, infrastructures...) du réseau sur le plan énergétique, i.e. de caractériser les flux d'énergie dans le réseau, de tracer le comportement énergétique et sa dynamique. Au contraire de la plupart des systèmes industriels, les charges de traction, i.e. le matériel roulant, ne sont pas seulement des charges mobiles dans l'espace, mais sont aussi très changeantes dans le temps en termes d'amplitude et de signe, basculant entre la consommation d'énergie électrique et la génération d'énergie électrique, selon que leur statut dynamique bascule entre un état d'accélération et un état de freinage. Tout en se déplaçant dans le réseau, un premier véhicule roulant peut être alimenté à la fois par une sous-station électrique délivrant de l'énergie électrique à la ligne de contact ou au 3^{ème} rail d'alimentation et un deuxième véhicule roulant (ou plusieurs) freinant à proximité du premier véhicule. Cette interaction électrique complexe est évaluée jusqu'à présent, en termes d'efficacité électrique et/ou de critères de dimensionnement, par des simulations algorithmiques. Le processus de simulation algorithmique implique la construction de scénarii de simulation, et de modèles, fixant des hypothèses en termes d'exploitation de la ligne, de véhicules roulants et de sous-stations d'alimentation. Toutefois si ces modèles basés sur les hypothèses de conception peuvent être utilisés dans une tâche préalable de dimensionnement d'un réseau ferroviaire pour garantir le fonctionnement dans des conditions normales et dégradées, la simulation seule ne suffit pas pour mesurer l'efficacité énergétique en fonctionnement réel.

Ainsi, suivant un premier aspect, l'invention propose un procédé de mesure du comportement énergétique d'un réseau de transport conforme à la revendication 1.

L'invention permet ainsi de mesurer le comportement énergétique du véhicule, et donc du réseau, relatif à une période donnée et/ou à des trajectoires données, de façon particulièrement fiable, en s'appuyant sur des données effectivement mesurées pendant l'exploitation du réseau sur cette période et/ou sur ces trajectoires tout en limitant le nombre des capteurs installés dans les véhicules roulants.

Dans des modes de réalisation, le procédé de mesure du comportement énergétique d'un réseau de transport suivant l'invention comporte en outre une ou plusieurs des caractéristiques des revendications 2 à 6.

Suivant un deuxième aspect, la présente invention propose un programme d'ordinateur selon la revendication 7.

Suivant un troisième aspect, la présente invention propose un système électronique de mesure du comportement énergétique d'un réseau de transport selon la revendication 8.

Dans un mode de réalisation, dans ledit système est conforme à la revendication 9.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue d'une partie d'un réseau de transport comprenant un système de mesure du comportement énergétique du réseau de transport dans un mode de réalisation considéré de l'invention ;
[Fig 2] la figure 2 est une vue d'une autre partie du réseau de transport dans le mode de réalisation considéré de l'invention ;
[Fig 3] la figure 3 est un organigramme d'étapes mises en oeuvre dans un mode de réalisation de l'invention.

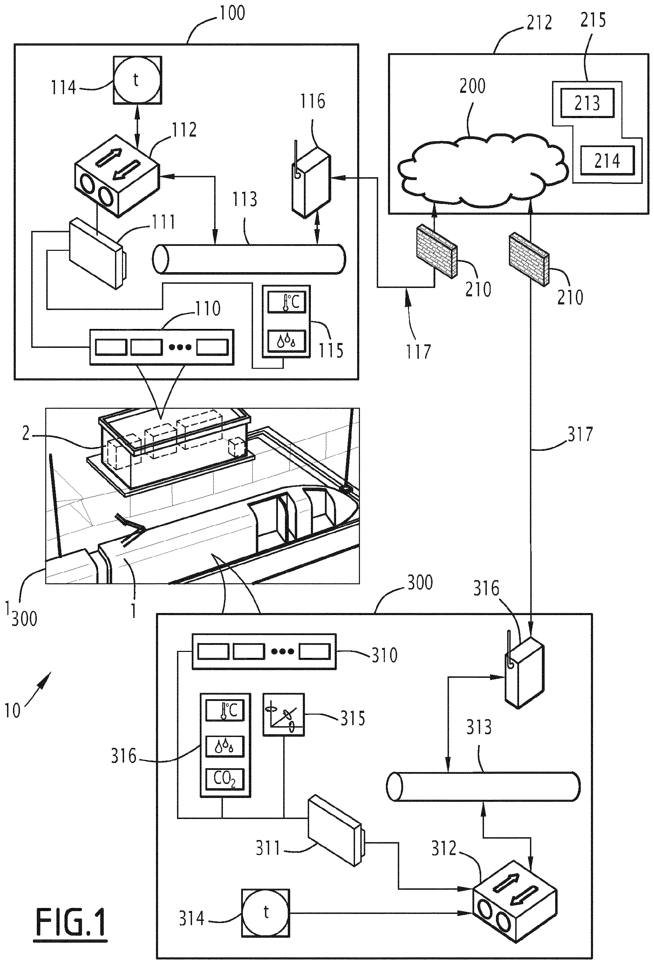

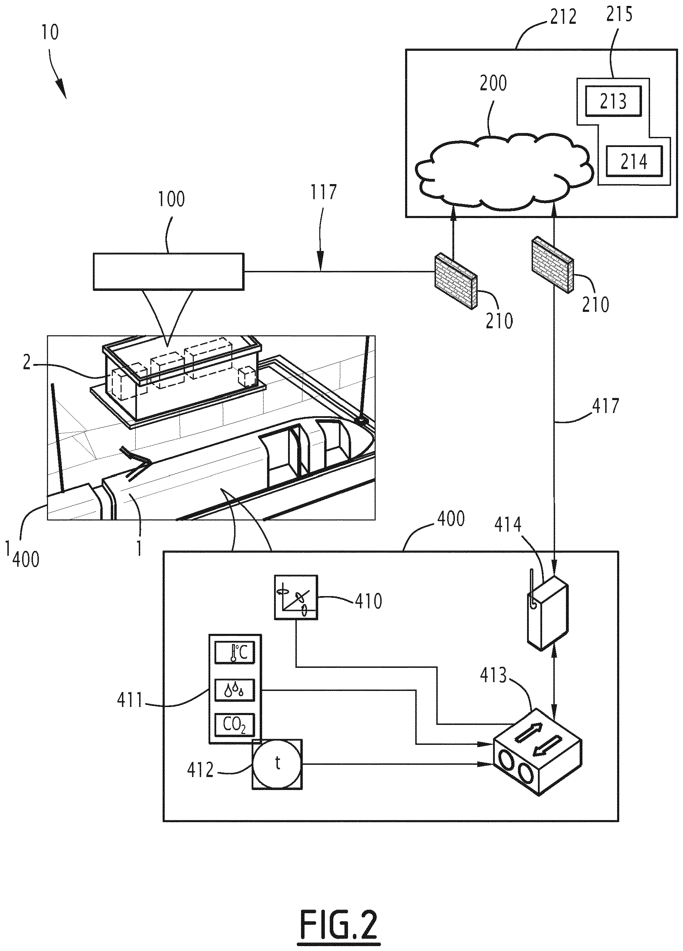

Les figures 1 et 2 représentent des parties distinctes d'un réseau de transport comportant un système de mesure du comportement énergétique dans un mode de réalisation de l'invention.

Le réseau de transport considéré ici est un réseau ferroviaire comportant une pluralité de véhicules roulants, ici des trains 1 circulant selon une ou des trajectoires prédéterminées sur un ensemble de voies ferrées, et comportant une pluralité de sous-stations d'alimentation électriques 2 disposées le long de ces voies. De façon connue, les trains 1 sont connectés par leur pantographe électriquement à une ligne d'alimentation électrique s'étendant au-dessus des voies qu'ils empruntent et alimentée par les sous-stations d'alimentation électrique.

Une sous-station d'alimentation électrique 2 comporte, de façon également connue, les équipements suivants : transformateur de traction, redresseur uni ou bidirectionnel, transformateur auxiliaire, armoires de contrôle commande et est adaptée pour délivrer sur la ligne d'alimentation à laquelle elle est raccordée une tension nominale d'alimentation de valeur comprise dans la plage de 750 V, 1500 V et 3000 V en courant continu et de 15 kV et 25 kV en courant alternatif.

Le système 10 de mesure du comportement énergétique du réseau de transport comprend, dans le mode de réalisation considéré, un ou plusieurs blocs de mesure embarqués d'un premier type 300 et un ou plusieurs blocs de mesure embarqués d'un deuxième type 400.

Chaque train 1 comporte un bloc de mesure embarqué, du premier ou deuxième type, respectivement 300, 400. Par exemple, dans l'exemple considéré, un train 1, référencé 1₃₀₀, comporte un bloc de mesure embarqué du premier type 300 tandis que les N autres trains considérés du réseau, du même type que le train 1, référencés 1₄₀₀, comportent chacun un bloc de mesure embarqué du deuxième type 400. Pour chaque type de train présent sur le réseau, il est nécessaire d'avoir un ou plusieurs trains équipés d'un bloc de mesure du type 300.

Le système 10 de mesure du comportement énergétique du réseau de transport comprend en outre dans le mode de réalisation considéré, un ou plusieurs blocs 100 de mesure en sous-station. Chaque sous-station considérée comporte un bloc 100 de mesure en sous-station 2.

Le système 10 de mesure du comportement énergétique du réseau de transport comprend en outre, dans le mode de réalisation considéré, un bloc de traitement central 212 comportant une base de données 200 et un bloc électronique de contrôle 215.

Dans un mode de réalisation, le bloc de contrôle 215 comporte une mémoire 213 et un processeur 214.

La figure 1 représente un bloc 100 de mesure en sous-station au sein d'une sous-station 2 et un bloc de mesure embarqué du premier type 300 embarqué dans le train 1₃₀₀.

En référence à la figure 1, le bloc 100 de mesure en sous-station comporte un ensemble 110 de capteurs de mesure des grandeurs électriques (tension, courant, énergie), un ensemble 115 de capteurs environnementaux, une unité 111 d'acquisition de signaux de mesure en sous-station, un concentrateur 112 de données, un bloc de synchronisation 114, un module de transmission 116.

L'ensemble 110 de capteurs de mesure des grandeurs électriques comporte une pluralité de capteurs adaptés pour mesurer les quantités électriques délivrées à destination de train(s) par la sous-station 2 via la ligne d'alimentation à laquelle elle est connectée (ainsi que ce(s) train(s)), ainsi que celles reçues par la sous-station 2 depuis cette ligne d'alimentation, en provenance de trains en situation de freinage. En plus de la mesure des quantités électriques délivrées aux trains, des capteurs spécifiques mesurent les quantités électriques délivrées aux systèmes dits auxiliaires situés au sol (signalisation, télécommunications, éclairage, chauffage, ventilation, etc.) présents en station voyageurs ou le long de la voie et alimentés depuis les transformateurs auxiliaires. L'ensemble 110 de capteurs d'énergie électrique fournit en temps réel les mesures effectuées à l'unité 111 d'acquisition de signaux de mesure en sous-station.

Dans le mode de réalisation considéré, les mesures des capteurs d'énergie électrique sont effectuées selon une fréquence comprise dans la plage de 1 Hz à 100 Hz.

L'ensemble 115 de capteurs environnementaux comprend des capteurs adaptés pour mesurer des données environnementales, par exemple la température et/ou l'humidité et/ou la vitesse du vent etc., le long de la voie au niveau de la sous-station 1. L'ensemble 115 de capteurs environnementaux fournit en temps réel les mesures effectuées à l'unité 111 d'acquisition de signaux de mesure en sous-station.

Dans le mode de réalisation considéré, les mesures des capteurs environnementaux sont effectuées selon une fréquence (ou des fréquences respectives) comprise dans la plage de 1 Hz à 100 Hz.

L'unité 111 d'acquisition de signaux de mesure en sous-station est adaptée pour recevoir l'ensemble des mesures, pour transformer en temps réel les signaux électriques analogiques en variables numériques et pour fournir l'ensemble des mesures sous forme de variables numériques au concentrateur 112 de données.

Le concentrateur 112 de données est un module électronique adapté pour associer entre elles les variables numériques fournies par l'unité 111 d'acquisition de signaux de mesure en sous-station, correspondant à des mêmes temps de mesure et les estampiller temporellement à l'aide du temps courant délivré par le bloc de synchronisation 114, créant ainsi un ensemble de données estampillées comprenant des mesures de données environnementales, des mesures d'énergie électrique, et un étiquetage temporel indiquant le temps de mesure correspondant à cet ensemble de données (la fréquence d'estampillage est par exemple dans la plage 1 Hz à 100 Hz, puis pour fournir les ensembles de données estampillées au module de transmission 116.

Dans le mode de réalisation considéré, le module de transmission 116 est un modem relié au concentrateur de données 112 par un réseau LAN 113 (en anglais « Local area Network ») avec fil ou sans fil.

Le module de transmission 116 est adapté pour transmettre les ensembles de données estampillés au bloc de traitement central 212 par une liaison de télécommunication 117 (par exemple une connexion Internet avec fil ou sans fil).

Dans un mode de réalisation, le bloc de synchronisation 114 délivrant un temps dans un système global synchronisé comprend par exemple un bloc électronique de type GNSS (Global Navigation Satellite System) utilisé pour effectuer l'estampillage temporel ou alors permet l'estampillage via un serveur NTP connecté à Internet via le module de transmission 116.

Dans un mode de réalisation, le bloc de synchronisation 114 délivrant un temps dans un système global synchronisé est connecté directement au module de transmission 116, l'estampillage des trames des données s'effectuant au niveau de celui-ci avant transmission au bloc de traitement central 212.

En référence à la figure 1, le bloc de mesure 300, i.e. du premier type, embarqué dans le train 1₃₀₀ comporte un ensemble 310 de capteurs de mesure des grandeurs électriques, un ensemble 316 de capteurs environnementaux, un module de détermination d'état dynamique 315, une unité 311 d'acquisition de signaux de mesure embarquée, un concentrateur 312 de données, un bloc de synchronisation et géolocalisation de type GNSS 314, un module de transmission 316.

L'ensemble 310 de capteurs de mesure des grandeurs électriques comporte une pluralité de capteurs adaptés pour mesurer les quantités électriques consommées par les équipements à bord du train, tant au niveau de la traction que des convertisseurs auxiliaires, et également générées par le train en situation de freinage, de manière à déterminer l'évolution de la puissance électrique du train dans le temps, tant pendant les phases d'accélération, de freinage que de roue libre : ainsi la puissance électrique dissipée dans les rhéostats de freinage est mesurée, ainsi que la puissance électrique consommée par les charges de « confort » (équipements de chauffage, climatisation etc.) et les charges auxiliaires (refroidissement du moteur, compresseurs à air, éclairage, etc.). L'ensemble 310 de capteurs de mesure des grandeurs électriques est adapté pour fournir en temps réel les mesures effectuées à l'unité 311 d'acquisition de signaux de mesure embarquée.

Dans le mode de réalisation considéré, les mesures des capteurs d'énergie électrique sont effectuées par exemple selon une fréquence comprise dans la plage 1 Hz à 100 Hz.

L'ensemble 316 de capteurs environnementaux comprend des capteurs adaptés pour mesurer des données environnementales (température, humidité, dioxyde de carbone (CO₂) à l'intérieur du train (les charges auxiliaires sont très dépendantes de ces paramètres environnementaux).

L'ensemble 316 de capteurs environnementaux est adapté pour fournir en temps réel les mesures effectuées à l'unité 311 d'acquisition de signaux de mesure embarquée.

Dans le mode de réalisation considéré, les mesures des capteurs environnementaux sont effectuées par exemple selon une fréquence (ou des fréquences respectives) comprise dans la plage 1 Hz à 100 Hz.

Le module de détermination d'état dynamique 315 est adapté pour collecter les données courantes d'état dynamique du train 1₃₀₀ : la localisation géographique du train, sa vitesse, son accélération : pour cela, il comprend - ou bien il s'interface avec - des équipements délivrant ces données : par exemple un module de calcul comprenant un système de type GNSS embarqué dans le train 1₃₀₀ pour déterminer la position et à partir de là, en déduire la vitesse, un accéléromètre à 3 axes adapté pour mesurer l'accélération.

Dans un mode de réalisation, quand la réception GNSS n'est pas possible (tunnel, etc.), ce système peut être remplacé par un système de type IMU (« Inertial Measurement Unit ») pour le calcul d'une position relative dans le temps. Ce système peut être couplé ou pas à des balises de référence au sol.

Le module de détermination d'état dynamique 315 fournit en temps réel les données indiquant l'état dynamique courant ainsi collectées à l'unité 311 d'acquisition de signaux de mesure embarquée.

L'unité 311 d'acquisition de signaux de mesure embarquée est adaptée pour recevoir l'ensemble des mesures, pour transformer en temps réel en variables numériques les signaux électriques analogiques reçus et pour fournir l'ensemble des mesures et données sous forme de variables numériques au concentrateur 312 de données.

Le concentrateur 312 de données est un module électronique adapté pour associer entre elles les variables numériques fournies par l'unité 311 d'acquisition de signaux de mesure embarquée correspondant à des mêmes temps de mesure et les estampiller temporellement à l'aide du bloc de synchronisation et de géolocalisation 314 délivrant un temps dans un système global synchronisé, créant ainsi un ensemble de données estampillées comprenant des mesures de données environnementales, des mesures d'énergie électrique, des données d'état dynamique et de géolocalisation et un étiquetage temporel indiquant le temps de mesure correspondant à cet ensemble de données (la fréquence d'estampillage est par exemple dans la plage 1 Hz à 100 Hz, puis pour les fournir au module de transmission 316.

Dans le mode de réalisation considéré, le module de transmission 316 est un modem relié au concentrateur de données 312 par un réseau LAN 313 filaire ou sans fil.

Le module de transmission 316 est adapté pour transmettre les ensembles de données estampillés au bloc de traitement central 212 par une liaison de télécommunication 317 (par exemple une connexion Internet avec fil ou sans fil).

Dans un mode de réalisation, le bloc de synchronisation 314 comprend par exemple un bloc électronique de type GNSS utilisé pour l'estampillage temporel ou alors effectue l'estampillage via un serveur NTP connecté à Internet via le LAN 313.

Dans un mode de réalisation, le bloc de synchronisation 314 délivrant un temps dans un système global synchronisé est connecté directement au module de transmission 316, l'estampillage des trames des données s'effectuant au niveau de celui-ci avant transmission au bloc de traitement central 212.

La figure 2 représente un bloc 100 de mesure en sous-station au sein d'une sous-station 2 et un bloc de mesure du deuxième type 400 embarqué dans un train 1₄₀₀.

Le contenu et fonctionnement du bloc 100 de la figure 2 est identique à celui de la figure 1.

En référence à la figure 2, le bloc de mesure 400, i.e. du deuxième type, embarqué dans un train 1₄₀₀ comporte un module de détermination d'état dynamique 410, un ensemble 411 de capteurs environnementaux, un bloc de synchronisation et de géolocalisation 412, un concentrateur 413 de données et un module de transmission 414.

Les blocs de synchronisation 114, 314 et 412 sont synchronisés entre eux et délivrent ainsi à chaque instant le même temps.

Le fonctionnement de l'ensemble 411 de capteurs environnementaux est identique à celui de l'ensemble 316 de capteurs environnementaux décrit en référence à la figure 1.

Le fonctionnement du module de détermination d'état dynamique 410 est identique à celui du module de détermination d'état dynamique 315 décrit en référence à la figure 1.

Le fonctionnement du concentrateur 413 de données est identique à celui du concentrateur 312 de données décrit en référence à la figure 1, à l'exception qu'il ne reçoit pas de mesures des grandeurs électriques : les ensembles de données estampillées qu'il fournit en sortie comprennent ainsi des mesures de données environnementales, des données d'état dynamique et de géolocalisation et un étiquetage temporel indiquant le temps de mesure correspondant à cet ensemble de données (ces ensembles de données ne comprennent pas de mesures de grandeurs électriques).

Le fonctionnement du bloc de synchronisation et de géolocalisation 412 est identique à celui du bloc de synchronisation et de géolocalisation 314 décrit en référence à la figure 1.

Le fonctionnement du module de transmission 414 est identique à celui du module de transmission 316 décrit en référence à la figure 1.

Un bloc de mesure embarqué 400 du deuxième type est un bloc compact, qui peut être installé très facilement dans un train, de façon beaucoup moins contraignante et intrusive qu'un bloc de mesure 300 du premier type.

On nommera ci-dessous les ensembles de données estampillés fournis par un bloc de mesure 300 du premier type « ensemble de données complet », et les ensembles de données estampillés fournis par un bloc de mesure 400 du deuxième type « ensemble de données partiel », ces derniers ne comprenant pas les mesures des grandeurs électriques.

La partie d'installation d'un système de mesure du comportement énergétique d'un réseau de transport la plus contraignante est celle relative à l'installation des capteurs de mesure des grandeurs électriques dans les trains. L'invention autorise que cette installation ne soit faite que sur un nombre réduit de trains (par exemple 1 train), un certain nombre des ensembles de données estampillés émanant de ces trains étant ensuite exploité par l'algorithme de machine learning lors de sa phase d'apprentissage.

Le bloc de traitement central 212 est adapté pour stocker dans une base de données 200 les ensembles de données estampillés en sous-station transmis par les blocs 100 de mesure en sous-station et les ensembles de données estampillés dans les trains transmis par les blocs 300, 400 de mesure embarqués. Dans un mode de réalisation, la fourniture des données via les liaisons 117 et 317 et avantageusement 417 est protégée par des passerelles coupe-feu 210, dites « firewall » et sécurisée par un procédé de cryptage informatique, prévenant les intrusions non autorisées.

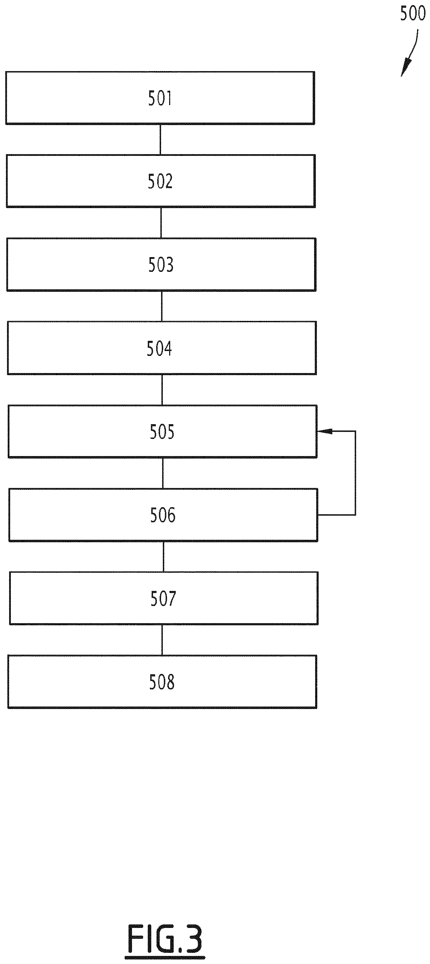

Un procédé 500 de mesure du comportement énergétique du réseau de transport comprenant les trains 1, i.e. le train 1₃₀₀ et les trains 1₄₀₀ et les sous-stations 2 va maintenant être décrit en référence à la figure 3. Il comporte une phase préliminaire permettant la construction et la validation d'un modèle de comportement énergétique de train obtenu par apprentissage automatique et permettant à partir d'ensembles de données estampillés partiels qui sont fournis en entrée du modèle, de calculer les données de mesure de grandeurs électriques correspondant aux temps et aux positions géographiques de mesure de ces ensembles de données partiels.

Le procédé 500 comprend ensuite une phase d'exploitation du modèle obtenu (à partir de l'étape 506 après validation du modèle) et une phase de construction d'une simulation du réseau complet sur la base de ce modèle, permettant de prendre en compte les interactions entre les trains et en outre entre les trains et l'infrastructure. Les valeurs des grandeurs électriques correspondant à chaque temps d'intérêt t sont calculées par le modèle de train, ou encore par la fonction de simulation du réseau complet, en fonction de données réelles mesurées à l'instant t (relatives notamment à l'état dynamique et à la position géographique du train ou des trains d'intérêt, et au contexte environnemental mesuré par les capteurs environnementaux).

Les étapes 501 à 508 sont mises en oeuvre par le bloc de contrôle 215 ; dans un mode de réalisation, la mémoire 213 du bloc de contrôle 215 comprend des instructions logicielles qui, lorsqu'elles sont exécutées sur le processeur 214, mettent en oeuvre ces étapes.

Dans une étape 501, des ensembles de données complets sont successivement enregistrés par le bloc de contrôle 215 dans la base de données 200 au fur et à mesure que le train 1₃₀₀ comprenant le bloc de mesure du premier type 300 circule sur l'ensemble des voies du réseau et qu'il transmet ces ensembles de données estampillés complets au bloc de traitement central 212, de la façon détaillée ci-dessous :
- l'ensemble 310 de mesure des grandeurs électriques fournit en temps réel les mesures effectuées à l'unité 311 d'acquisition de signaux de mesure embarquée. L'ensemble 316 de capteurs environnementaux fournit en temps réel les mesures effectuées à l'unité 311 d'acquisition de signaux de mesure embarquée. Le module de détermination d'état dynamique 315 collecte les données indiquant l'état dynamique courant et les fournit en temps réel à l'unité 311 d'acquisition de signaux de mesure embarquée. L'unité 311 d'acquisition de signaux de mesure embarquée reçoit ces mesures et données d'état dynamique, transforme en temps réel en variables numériques les signaux électriques analogiques reçus et fournit les mesures et données sous forme de variables numériques au concentrateur 312 de données. Le concentrateur 312 de données associe entre elles les variables numériques fournies par l'unité 311 d'acquisition de signaux de mesure embarquée correspondant à des mêmes temps de mesure et les estampille temporellement et spatialement à l'aide du bloc de synchronisation et géolocalisation 314 créant ainsi un ensemble de données estampillées comprenant des mesures de données environnementales, des mesures de grandeurs électriques, des données d'état dynamique et un étiquetage temporel et spatial indiquant le temps et les coordonnées spatiales de mesure correspondant à cet ensemble de données, puis les fournit au module de transmission 316, qui transmettre les ensembles de données estampillés au bloc de traitement central 212 par la liaison de télécommunication 217 où ils sont enregistrés dans la base de données 200.

Dans une étape 502, ces ensembles de données issus du bloc de mesure 300 sont pré-traités par le bloc de contrôle 215 : les ensembles comportant des erreurs sont détectés et supprimés, les synchronisations sont vérifiées, une étape de normalisation et d'extraction de caractéristiques de ces ensembles de données est effectuée pour permettre la mise en oeuvre de l'apprentissage automatique (« machine learning »).

Dans une étape 503, comme il est connu dans le cadre des processus d'apprentissage automatique, les ensembles de caractéristiques sont répartis par le bloc de contrôle 215 en deux parties, une première partie destinée à l'entraînement de l'algorithme (son apprentissage) et une deuxième partie destinée à la validation du modèle algorithmique obtenu à l'issu de l'apprentissage.

Dans une étape 504, la première partie de caractéristiques est utilisée par le bloc de contrôle 215 pour l'entraînement de l'algorithme par apprentissage automatique (en anglais « machine learning », qui génère le modèle algorithmique correspondant au train 1₃₀₀, en utilisant des techniques d'apprentissage supervisé (« supervised machine learning ») et d'apprentissage par renforcement (« reinforcement machine learning »). Ces techniques reposent sur l'utilisation des algorithmes spécifiques d'apprentissage automatique comme par exemple les algorithmes de régression : régression linéaire, régression à vecteurs de support (« support vector régression »), régression par réseau de neurones (« neural network régression »), régression par arbre de décision (« decision tree régression »), régression par forêt aléatoire (« random forest régression »), etc.

Ce modèle algorithmique est une fonction qui établit une corrélation entre les variables mesurées qui, à son tour, permet de déterminer les valeurs des grandeurs électriques à partir d'un ensemble de données partiel qui lui est fourni en entrée.

Les mesures environnementales effectuées dans le train 1₃₀₀ (les mesures de taux de CO2 et d'humidité à bord effectuées dans un mode de réalisation dans chaque voiture de train sont représentatives du nombre de passagers à bord du train) notamment sont utilisées lors de l'apprentissage pour déterminer les corrélations entre ces mesures environnementales, l'état dynamique du train et l'énergie électrique échangée au niveau du train et représentée par les mesures embarquées de tension et courant.

Dans une étape 505, ce modèle est évalué par le bloc de contrôle 215 sur la base de la deuxième partie de caractéristiques, qui n'a pas encore été utilisée : les écarts entre les mesures électriques figurant dans un ensemble de caractéristiques correspondant à un temps de mesure et les valeurs de mesures de grandeurs électriques calculées par le modèle en fonction des autres caractéristiques de cet ensemble de caractéristiques sont utilisées par le bloc de contrôle 215 pour calculer un score de confiance sur la base de cette deuxième partie de caractéristiques.

Dans une étape 506 :
- si le score n'est pas satisfaisant, le modèle est modifié par le bloc de contrôle 215 en changeant les paramètres de l'algorithme ou ses hyperparamètres et en relançant l'algorithme d'apprentissage automatique avec des hyperparamètres de comportement différents, ou en changeant de type d'algorithme, jusqu'à ce qu'un score de confiance satisfaisant soit atteint - par exemple supérieur à un seuil prédéfini ;
- si un score satisfaisant est atteint, le modèle algorithmique alors obtenu permet donc de prédire, en toute localisation le long d'une trajectoire du réseau de transport avec le score de confiance requis, en fonction des données d'état dynamique et des données environnementales délivrées par un module de mesure 400 au bloc de traitement central 212 les valeurs des grandeurs électriques impliquées par un train 1₄₀₀ quelconque du réseau : il est en particulier adapté pour délivrer une prédiction de la variation dans le temps de la consommation électrique de la totalité de la flotte de trains 1 prenant en compte le fonctionnement réel de chaque train :
   ainsi l'ensemble 411 de capteurs environnementaux fournit en temps réel les mesures effectuées au concentrateur 413 de données. Le module de détermination d'état dynamique 410 collecte les données indiquant l'état dynamique courant et les fournit en temps réel au concentrateur 413 de données. Le concentrateur 312 de données associe entre elles celles de ces informations correspondant à des mêmes temps de mesure et les estampille temporellement et spatialement à l'aide du bloc de synchronisation et géolocalisation 412 créant ainsi un ensemble de données estampillées comprenant des mesures de données environnementales, des données d'état dynamique et un étiquetage temporel et spatial indiquant le temps et les coordonnées de mesure correspondant à cet ensemble de données, puis les fournit au module de transmission 414, qui transmet les ensembles de données estampillés au bloc de traitement central 212 où ils sont enregistrés dans la base de données 200 et utilisés pour calculer les valeurs de courant et tension correspondant aux temps d'estampillage des ensembles de données partiels et pour en déduire une prédiction de la variation dans le temps de la consommation électrique de la totalité de la flotte de trains 1 prenant en compte le fonctionnement réel de chaque train.

Le modèle algorithmique correspondant au train 1₃₀₀ est également à nouveau validé par le bloc de contrôle 215 par sélection de séquences temporelles spécifiques de valeurs de mesures de tension et courant de sous-stations, correspondant à des situations où un seul train passe à l'endroit du point de connexion électrique d'une sous-station alimentant la ligne d'alimentation du train. Dans un tel cas, les mesures en sous-station reflètent les valeurs électriques relatives au train pendant cette séquence temporelle : une erreur correspondante est également calculée par rapport aux valeurs électriques du modèle trains issus de l'apprentissage automatique. Le modèle train est ainsi corrigé de manière fine, train par train, par rapport au modèle unique général dans le but de tenir compte des dispersions des caractéristiques de chaque train.

Dans une étape 507, il est construit un modèle de simulation physique sur la base d'un système d'équations qui décrit les lois physiques régissant le comportement énergétique du réseau, appelé simulateur physique du réseau. Par rapport au modèle train qui est bâti sur la base des données, le modèle réseau est bâti sur la base des équations physiques. Le simulateur physique utilise un solveur qui résout ces équations en faisant appel à des modèles des trains construit ci-dessus, des ensembles de données transmis par les blocs de mesure embarqués 300, 400, d'un modèle des horaires des trains 1₃₀₀ et 1₄₀₀ sur leur trajectoire, et des modèles des équipements d'infrastructure physiques et électriques (par exemple, les caténaires, les câbles électriques. Le modèle des sous-stations est construit à partir des mesures fournies par le bloc de mesure 100 en sous-stations 2.

Les modèles de table horaire sont construits à partir de la géolocalisation de tous les trains et de leurs autres mesures dynamiques. Le modèle de l'infrastructure est connu à priori à partir des schémas de câblage électrique, des plans d'implantation du génie civil et des plans qui décrivent les caractéristiques de la voie (gradients, courbes, etc). Ces données servent au paramétrage du simulateur physique. Les modèles de données sont agnostiques par rapport au caractéristiques physiques de la voie, elles servent pour établir des modèles train et sous-station qui seront utilisés par le simulateur physique.

Les mesures environnementales effectuées en sous-station 2 sont alors utilisées lors de l'apprentissage du modèle train pour établir une corrélation entre les conditions environnementales externes aux trains et leurs grandeurs électriques tandis que les mesures environnementales effectuées à l'intérieur des trains sont utilisées pour établir une corrélation avec la charge des passagers qui modifie la masse du train.

Ce simulateur physique du réseau calcule les tensions et courants de toute l'infrastructure du réseau, y compris de ceux des sous-stations 2.

Dans chaque sous-station 2 équipée d'un bloc 100 de mesure en sous-station comme décrit plus haut, les valeurs de tension et courant représentant les échanges d'énergie électriques au niveau de la sous-station 2 sont collectées de la façon suivante par le bloc de traitement central 212 :
- l'ensemble 110 de capteurs d'énergie électrique mesure les quantités électriques délivrées à destination de train(s) par la sous-station 2 et les fournit en temps réel à l'unité 111 d'acquisition de signaux de mesure en sous-station; l'ensemble 115 de capteurs environnementaux fournit également en temps réel les mesures environnementales effectuées à l'unité 111 d'acquisition de signaux de mesure en sous-station qui transforme en temps réel les signaux électriques analogiques en variables numériques et les fournit au concentrateur 112 de données ; ce dernier associe entre elles les variables numériques fournies par l'unité 111 d'acquisition de signaux de mesure en sous-station correspondant à des mêmes temps de mesure et les estampille temporellement à l'aide du temps courant délivré par le bloc de synchronisation 114, puis il délivre les ensembles de données estampillées au module de transmission 116 qui les transmet au bloc de traitement central 212 où les ensembles de données provenant de chaque sous-station 2 sont stockés et traités.

Dans une étape 508, les valeurs de tensions et courants relatives aux sous-stations 2 et obtenues par calcul par le simulateur physique sont comparées par le bloc de contrôle 215 avec les valeurs de tensions, courants effectivement mesurées par les blocs 100 de mesure en sous-station correspondant aux mêmes temps respectifs, notamment les ensembles de capteurs d'énergie électrique 110 : la portée de ces mesures en sous-stations est double : d'abord la calibration du modèle de sous-station utilisé par le simulateur physique du réseau, et l'évaluation de la validité du modèle par apprentissage machine une fois extrapolé sur l'ensemble de la flotte de trains. Une erreur correspondante est calculée.

L'erreur globale obtenue au niveau de chaque sous-station est comparée à un seuil prédéfini :
- si elle est supérieure à ce seuil, le bloc de contrôle 215 modifie les paramètres du simulateur physique du réseau et les étapes 508 à 510 sont réitérées jusqu'à ce que l'erreur globale soit inférieur au seuil prédéfini utilisé à l'étape 510. Par exemple, le bloc de contrôle 215 peut mettre en oeuvre un algorithme d'apprentissage par renforcement au niveau du système en agissant sur les paramètres du simulateur physique en fonction des résultats de calcul obtenus au niveau des grandeurs électriques des sous stations ;
- si elle est inférieure à ce seuil, le simulateur physique du réseau est considéré valide et est utilisé alors par le bloc de contrôle 215 pour déterminer les coefficients d'énergie KPI (en anglais « Key Performance Indicator ») et pour tester différentes solutions pour améliorer ces derniers et ainsi optimiser le réseau sur le plan énergétique.

Les KPI peuvent être de nature variée et permettent d'évaluer l'efficacité énergétique du réseau : un tel indicateur peut être par exemple l'énergie nette transportée dans le réseau, les kWh utilisés en service, hors service (i.e. les trains étant garés au dépôt).

Ces solutions testées peuvent correspondre à des scénarii de type « et si » (en anglais « what if » scénarii) : par exemple, dans le cas où la conduite d'un conducteur de train est particulièrement économe sur le plan énergétique, il sera réalisé à l'aide du simulateur physique du réseau une simulation où tous les conducteurs adoptent cette conduite, et par exemple les KPI correspondants seront calculés. Dans un autre exemple ; il est simulé une ou des modifications de grille horaire, par exemple un glissement de la grille horaire, pour détecter un maximum de récupération de l'énergie entre trains etc. De tels scénarii sont mis en oeuvre également pour décider d'installer des équipements supplémentaires dans le réseau, tels que des équipements de stockage d'énergie électrique ou des sous-stations 2 réversibles.

On considère ici que chaque train 1₄₀₀ du réseau de transport considéré a un comportement (en termes de consommation/génération électrique) similaire au(x) train(s) (ici le train 1₃₀₀) utilisés pour la phase d'apprentissage. Si cela n'était pas le cas, chaque type de train autre, devra soit faire l'objet d'une phase d'apprentissage dédiée, soit donner lieu à l'installation d'un bloc de mesure du premier type avec des capteurs de tension et/ou courant consommé et/ou généré.

La présente invention permet ainsi de collecter des mesures en temps réel effectuées dans le réseau et de les traduire en valeurs électriques représentatives du comportement énergétique du réseau.

Dans un autre mode de réalisation, le bloc de contrôle 215 est réalisé sous forme d'un composant logique programmable, tel qu'un FPGA (de l'anglais « *Field Programmable Gate Array*) », ou encore sous forme d'un circuit intégré dédié, tel qu'un ASIC (de l'anglais « *Applications Spécifie Integrated Circuit* »).

La présente invention permet l'obtention d'indicateurs fiables de performance énergétique, et d'évaluer finement le comportement énergétique du réseau de transport en fonction du temps et de l'espace tout en limitant les installations invasives de capteurs dans les véhicules roulants du réseau., grâce à l'emploi réduit de capteurs et à l'utilisation d'algorithme de type machine learning réduisant le nombre de mesures embarquées nécessaires.

Pour ce faire, les corrélations entre mesures sont utilisées.

Dans le mode de réalisation décrit ci-dessus, un train était doté de capteur(s) de tension et/ou de courant (le ou les trains comportant un bloc de mesure 300) et les mesures de ces capteurs étaient utilisées dans la phase d'exploitation par le système de mesure. L'intérêt de l'invention est qu'elle permet que le nombre de trains dotés de tels capteurs soit réduit (dans l'exemple décrit, il était égal à 1 mais pourrait prendre d'autres valeurs), voire égal à 0 pendant la phase d'exploitation du système de mesure du comportement énergétique. Dans un tel cas, les capteurs de tension et/ou courant ne sont utilisés dans les trains que dans la phase préliminaire, et dans ladite phase d'exploitation du système de mesure, les valeurs des tensions et courants relatives à la consommation des trains de la flotte sont toutes déterminées à l'aide de l'algorithme du bloc de traitement central et validées par les mesures de grandeurs électriques en sous-stations 2.

L'invention a été décrite ci-dessus en référence à un système ferroviaire (décrit ici en référence à des trains mais dans un autre mode de réalisation, les véhicules peuvent être des métros ou des tramways), mais elle peut être mise en oeuvre dans d'autres types de réseau de transport, par exemple un réseau de bus électriques, les sous-stations étant alors des bornes de rechargement électrique, ou d'autres systèmes de mobilité urbaine où la surveillance du comportement énergétique est d'importance.

## Revendications

1. Procédé de mesure du comportement énergétique d'un réseau de transport comprenant un ensemble de sous-station(s) (2) de fourniture d'énergie électrique et une flotte de véhicules (1) alimentés électriquement par lesdites sous-stations, lesdits véhicules suivant des trajectoires prédéfinies et comprenant un bloc (316) de capture de données environnementales comprenant au moins un capteur parmi un capteur de température, un capteur d'humidité et un capteur de CO₂, ledit procédé comprenant les étapes suivantes mises en oeuvre par un système électronique (10) de mesure du comportement énergétique du réseau de transport comprenant une mémoire (213) et un processeur (214):
- la collecte des données environnementales capturées par le(s) capteur(s) du bloc de capture pendant la circulation des véhicules (1) sur leur trajectoire, les données environnementales étant associées chacune à leur temps de capture respectif, ;
- la collecte de données caractérisant un état dynamique des véhicules (1) pendant leur circulation sur leur trajectoire ;
- la détermination de valeurs électriques de consommation des véhicules (1) en des temps d'échantillonnage ;
- le calcul d'au moins un indicateur de performance énergétique du réseau en fonction desdites valeurs électriques déterminées ;
où les valeurs électriques de consommation auxdits temps d'échantillonnage d'au moins certains desdits véhicules (1) sont déterminées par un modèle algorithmique, ledit modèle algorithmique étant stocké dans la mémoire (213) du système électronique de mesure (10) et exécuté sur le processeur (214) dudit système, les valeurs électriques de consommation auxdits temps d'échantillonnage de chacun de ces véhicules (1) étant calculées par le modèle algorithmique en fonction des données environnementales capturées et des temps de capture associés collectés pendant la circulation du véhicule sur ladite trajectoire, ainsi que des données caractérisant l'état dynamique du véhicule sur la trajectoire prédéfinie aux temps d'échantillonnage, les valeurs électriques de consommation d'une sous-station (2) étant déterminées auxdits temps d'échantillonnage lors du passage d'un véhicule (1) alors seul alimenté par ladite sous-station (2) ; des valeurs électriques de consommation dudit véhicule étant déduites desdites valeurs électriques de consommation de sous-station déterminées et la validité du modèle algorithmique est évaluée par comparaison entre lesdites valeurs électriques de consommation dudit véhicule déduites et lesdites valeurs électriques de consommation des véhicules déterminées.

2. Procédé de mesure du comportement énergétique d'un réseau de transport selon la revendication 1, selon lequel ledit modèle algorithmique a été obtenu à l'issue d'une phase d'apprentissage automatique en fonction d'ensembles de données d'apprentissage comportant, pour des temps d'échantillonnage, sur chacune des trajectoires, des valeurs électriques de consommation d'au moins un véhicule effectivement mesurées par un ensemble (310) de capteur(s) de consommation électrique embarqué dans le véhicule, des mesures des données environnementales, et des données caractérisant l'état dynamique du véhicule.

3. Procédé de mesure du comportement énergétique d'un réseau de transport selon la revendication 1 ou 2, selon lequel lesdits véhicules (1) comprennent un bloc d'estampillage spatial et temporel (314), et les valeurs électriques de consommation auxdits temps d'échantillonnage de chacun de ces véhicules (1) sont calculées par le modèle algorithmique en fonction des données environnementales capturées et des temps et des localisations de capture associés fournis par le bloc d'estampillage (314) et collectés pendant la circulation du véhicule sur ladite trajectoire, ainsi que des données caractérisant l'état dynamique du véhicule sur la trajectoire prédéfinie aux temps et localisations d'échantillonnage.

4. Procédé de mesure du comportement énergétique d'un réseau de transport selon la revendication 3, selon lequel ledit modèle algorithmique a été obtenu à l'issue d'une phase d'apprentissage automatique en fonction d'ensembles de données d'apprentissage comportant, pour des temps et des localisations d'échantillonnage, sur chacune des trajectoires, des valeurs électriques de consommation d'au moins un véhicule effectivement mesurées par un ensemble de capteur(s) de consommation électrique embarqué dans le véhicule, des mesures des données environnementales, et des données caractérisant l'état dynamique du véhicule.

5. Procédé de mesure du comportement énergétique d'un réseau de transport selon l'une quelconque des revendications précédentes, selon lequel les données caractérisant l'état dynamique du véhicule (1) sur la trajectoire prédéfinie comprennent, un ou plusieurs des éléments parmi la localisation du véhicule, sa vitesse, son accélération, la pente de la trajectoire, la courbe de la trajectoire.

6. Procédé de mesure du comportement énergétique d'un réseau de transport selon l'une quelconque des revendications précédentes, selon lequel les valeurs électriques de consommation des sous-stations (2) sont également déterminées auxdits mêmes temps d'échantillonnage, et un modèle global de simulation du réseau est déterminé par apprentissage en fonction desdites valeurs électriques de consommation des sous-stations déterminées, dudit modèle algorithmique représentant le comportement énergétique des véhicules et d'un modèle de planification horaire des véhicules.

7. Programme d'ordinateur comportant des instructions logicielles qui, lorsqu'elles sont exécutées par un ordinateur, mettent en oeuvre un procédé selon l'une quelconque des revendications précédentes.

8. Système électronique (10) de mesure du comportement énergétique d'un réseau de transport comprenant un ensemble de sous-station(s) (2) de fourniture d'énergie électrique et une flotte de véhicules (1) alimentés électriquement par lesdites sous-stations, lesdits véhicules suivant des trajectoires prédéfinies et comprenant un bloc (316) de capture de données environnementales comprenant au moins un capteur parmi un capteur de température, un capteur d'humidité et un capteur de CO₂, ledit système étant adapté pour collecter des données environnementales capturées par le(s) capteur(s) du bloc de capture pendant la circulation des véhicules (1) sur leur trajectoire, les données environnementales étant associées chacune à leur temps de capture respectif, pour collecter de données caractérisant un état dynamique des véhicules (1) pendant leur circulation sur leur trajectoire ;
ledit système étant en outre adapté pour déterminer des valeurs électriques de consommation des véhicules (1) en des temps d'échantillonnage et pour calculer au moins un indicateur de performance énergétique du réseau en fonction desdites valeurs électriques déterminées ;
ledit système comporte en outre une mémoire (213) stockant un modèle algorithmique et un processeur (214) en ce qu'il est adapté pour déterminer les valeurs électriques de consommation auxdits temps d'échantillonnage d'au moins certains desdits véhicules (1) par exécution dudit modèle algorithmique sur ledit processeur, les valeurs électriques de consommation auxdits temps d'échantillonnage de chacun de ces véhicules (1) étant calculées par le modèle algorithmique en fonction des données environnementales capturées et des temps de capture associés collectés pendant la circulation du véhicule sur ladite trajectoire, ainsi que des données caractérisant l'état dynamique du véhicule sur la trajectoire prédéfinie aux temps d'échantillonnage, ledit système étant en outre adapté pour déterminer les valeurs électriques de consommation d'une sous-station auxdits temps d'échantillonnage lors du passage d'un véhicule alors seul alimenté par ladite sous-station ; des valeurs électriques de consommation dudit véhicule sont déduites desdites valeurs électriques de consommation de sous-station déterminées et le processeur est adapté pour évaluer la validité du modèle algorithmique par comparaison entre lesdites valeurs électriques de consommation dudit véhicule déduites et lesdites valeurs électriques de consommation des véhicules déterminées.

9. Système électronique (10) de mesure du comportement énergétique d'un réseau de transport selon la revendication 8, selon lequel ledit modèle algorithmique a été obtenu à l'issue d'une phase d'apprentissage automatique en fonction d'ensembles de données d'apprentissage comportant, pour des temps d'échantillonnage, sur chacune des trajectoires, des valeurs électriques de consommation d'au moins un véhicule effectivement mesurées par un ensemble (310) de capteur(s) de consommation électrique embarqué dans le véhicule, des mesures des données environnementales, et des données caractérisant l'état dynamique du véhicule.

## Patentansprüche

1. Verfahren zur Messung des Energieverhaltens eines Transportnetzes, umfassend eine Anordnung von Unterstation(en) (2) zum Bereitstellen elektrischer Energie und eine Flotte von Fahrzeugen (1), die von den Unterstationen elektrisch versorgt werden, wobei die Fahrzeuge vordefinierten Strecken folgen und einen Block (316) zur Erfassung von Umgebungsdaten umfassen, umfassend mindestens einen Sensor aus einem Temperatursensor, einem Feuchtigkeitssensor und einem CO₂-Sensor, das Verfahren umfassend die folgenden Schritte, die von einem elektronischen System (10) zur Messung des Energieverhaltens des Transportnetzes implementiert werden, umfassend einen Speicher (213) und einen Prozessor (214):
- Sammeln der Umgebungsdaten, die von dem/den Sensor(en) des Erfassungsblocks während der Fahrt der Fahrzeuge (1) auf ihrer Strecke erfasst werden, wobei die Umgebungsdaten jeweils mit ihrer jeweiligen Erfassungszeit assoziiert sind,;
- Sammeln von Daten, die einen dynamischen Zustand der Fahrzeuge (1) während ihrer Fahrt auf ihrer Strecke charakterisieren;
- Bestimmen von elektrischen Verbrauchswerten der Fahrzeuge (1) an Abtastzeiten;
- Berechnen mindestens eines Energieleistungsindikators des Netzes abhängig von den bestimmten elektrischen Werten;
wobei die elektrischen Verbrauchswerte zu den genannten Abtastzeiten von mindestens einigen der genannten Fahrzeuge (1) durch ein algorithmisches Modell bestimmt werden, wobei das genannte algorithmische Modell in dem Speicher (213) des elektronischen Messsystems (10) gespeichert ist und auf dem Prozessor (214) des Systems ausgeführt wird, wobei die elektrischen Verbrauchswerte an den Abtastzeiten von jedem dieser Fahrzeuge (1) durch das algorithmische Modell abhängig von den erfassten Umgebungsdaten und den assoziierten Erfassungszeiten, die während der Fahrt des Fahrzeugs auf der Strecke gesammelt werden, sowie auf den Daten, die den dynamischen Zustand des Fahrzeugs auf der vordefinierten Strecke an den Abtastzeiten charakterisieren, berechnet werden, wobei die elektrischen Verbrauchswerte einer Unterstation (2) an den Abtastzeiten während der Vorbeifahrt eines Fahrzeugs (1), das dann allein von der Unterstation (2) versorgt wird, bestimmt werden; wobei elektrische Verbrauchswerte des Fahrzeugs von den bestimmten elektrischen Verbrauchswerten der Unterstation abgeleitet werden und die Gültigkeit des algorithmischen Modells durch Vergleich zwischen den abgeleiteten elektrischen Verbrauchswerten des Fahrzeugs und den bestimmten elektrischen Verbrauchswerten der Fahrzeuge bewertet wird.

2. Verfahren zur Messung des Energieverhaltens eines Transportnetzes nach Anspruch 1, wobei das algorithmische Modell am Ende einer Phase des maschinellen Lernens auf Basis von Lerndatensätzen erlangt wird, umfassend für die Abtastzeiten auf jeder der Strecken elektrische Verbrauchswerte mindestens eines Fahrzeugs, die tatsächlich von einer Anordnung (310) von Sensor(en) für den elektrischen Verbrauch an Bord des Fahrzeugs gemessen werden, Messungen von Umgebungsdaten und Daten, die den dynamischen Zustand des Fahrzeugs charakterisieren.

3. Verfahren zur Messung des Energieverhaltens eines Transportnetzes nach Anspruch 1 oder 2, wobei die Fahrzeuge (1) einen räumlichen und zeitlichen Stempelblock (314) umfassen, und wobei die elektrischen Verbrauchswerte an den Abtastzeiten von jedem dieser Fahrzeuge (1) durch das algorithmische Modell abhängig von den erfassten Umgebungsdaten und den assoziierten Zeiten und Orten der Erfassung, die von dem räumlichen und zeitlichen Stempelblock (314) bereitgestellt und während der Fahrt des Fahrzeugs auf der Strecke gesammelt werden, sowie auf den Daten, die den dynamischen Zustand des Fahrzeugs auf der vordefinierten Strecke an den Zeiten und Orten der Abtastung charakterisieren, berechnet werden.

4. Verfahren zur Messung des Energieverhaltens eines Transportnetzes nach Anspruch 3, wobei das algorithmische Modell am Ende einer Phase des maschinellen Lernens auf Basis von Lerndatensätzen erlangt wird, umfassend für die Zeiten und Orte der Abtastung auf jeder der Strecken elektrische Verbrauchswerte mindestens eines Fahrzeugs, die tatsächlich von einem Satz von Sensor(en) für den elektrischen Verbrauch an Bord des Fahrzeugs gemessen werden, Messungen von Umgebungsdaten und Daten, die den dynamischen Zustand des Fahrzeugs charakterisieren.

5. Verfahren zur Messung des Energieverhaltens eines Transportnetzes nach einem der vorherigen Ansprüche, wobei die Daten, die den dynamischen Zustand des Fahrzeugs (1) auf der vordefinierten Strecke charakterisieren, umfassend eines oder mehrere der Elemente aus dem Standort des Fahrzeugs, seiner Geschwindigkeit, seiner Beschleunigung, der Steigung der Strecke, der Kurve der Strecke.

6. Verfahren zur Messung des Energieverhaltens eines Transportnetzes nach einem der vorherigen Ansprüche, wobei die elektrischen Verbrauchswerte der Unterstationen (2) auch an denselben Abtastzeiten bestimmt werden und ein globales Simulationsmodell des Netzes durch Lernen auf Basis von den bestimmten elektrischen Verbrauchswerten der Unterstationen, dem algorithmischen Modell, das das Energieverhalten der Fahrzeuge darstellt, und einem Zeitplanungsmodell der Fahrzeuge bestimmt wird.

7. Computerprogramm, umfassend Softwareanweisungen, die, wenn sie von einem Computer ausgeführt werden, ein Verfahren nach einem der vorherigen Ansprüche implementieren.

8. Elektronisches System (10) zur Messung des Energieverhaltens eines Transportnetzes, umfassend eine Anordnung von Unterstation(en) (2) zum Bereitstellen elektrischer Energie und eine Flotte von Fahrzeugen (1), die von den Unterstationen elektrisch versorgt werden, wobei die Fahrzeuge vordefinierten Strecken folgen und einen Block (316) zur Erfassung von Umgebungsdaten umfassen, umfassend mindestens einen Sensor aus einem Temperatursensor, einem Feuchtigkeitssensor und einem CO₂-Sensor, wobei das System angepasst ist, um Umgebungsdaten zu sammeln, die von dem/den Sensor(en) des Erfassungsblocks während der Fahrt der Fahrzeuge (1) auf ihrer Strecke erfasst werden, wobei die Umgebungsdaten jeweils mit ihrer jeweiligen Erfassungszeit assoziiert sind, um Daten zu sammeln, die einen dynamischen Zustand der Fahrzeuge (1) während ihrer Fahrt auf ihrer Strecke charakterisieren;
wobei das System ferner angepasst ist, um elektrische Verbrauchswerte der Fahrzeuge (1) an Abtastzeiten zu bestimmen und mindestens einen Energieleistungsindikator des Netzes abhängig von den bestimmten elektrischen Werten zu berechnen;
das System ferner umfassend einen Speicher (213), der ein algorithmisches Modell speichert, und einen Prozessor (214), der angepasst ist, um die elektrischen Verbrauchswerte an den Abtastzeiten von mindestens einigen der Fahrzeuge (1) durch Ausführen des algorithmischen Modells auf dem Prozessor zu bestimmen, wobei die elektrischen Verbrauchswerte an den Abtastzeiten von jedem dieser Fahrzeuge (1) durch das algorithmische Modell abhängig von den erfassten Umgebungsdaten und den assoziierten Erfassungszeiten, die während der Fahrt des Fahrzeugs auf der Strecke gesammelt werden, und von Daten, die den dynamischen Zustand des Fahrzeugs auf der vordefinierten Strecke an den Abtastzeiten charakterisieren, berechnet werden, wobei das System ferner angepasst ist, um die elektrischen Verbrauchswerte einer Unterstation an den Abtastzeiten während der Vorbeifahrt eines Fahrzeugs, das dann allein von der Unterstation versorgt wird, zu bestimmen; wobei elektrische Verbrauchswerte des Fahrzeugs von den bestimmten elektrischen Verbrauchswerten der Unterstation abgeleitet werden und der Prozessor angepasst ist, um und die Gültigkeit des algorithmischen Modells durch Vergleich zwischen den abgeleiteten elektrischen Verbrauchswerten des Fahrzeugs und den bestimmten elektrischen Verbrauchswerten der Fahrzeuge zu bewerten.

9. Elektronisches System (10) zur Messung des Energieverhaltens eines Transportnetzes nach Anspruch 8, wobei das algorithmische Modell am Ende einer Phase des maschinellen Lernens auf Basis von Lerndatensätzen erlangt wird, umfassend für die Abtastzeiten auf jeder der Strecken elektrische Verbrauchswerte mindestens eines Fahrzeugs, die tatsächlich von einer Anordnung (310) von Sensor(en) für den elektrischen Verbrauch an Bord des Fahrzeugs gemessen werden, Messungen von Umgebungsdaten und Daten, die den dynamischen Zustand des Fahrzeugs charakterisieren.

## Claims

1. - A method for measuring the energy behavior of a transport network comprising a set of substation(s) (2) for supplying electrical energy and a fleet of vehicles (1) electrically supplied by said substations, said vehicles following predefined trajectories and comprising an environmental data capture unit (316) comprising at least one temperature sensor, one humidity sensor and one CO₂ sensor, said method comprising the following steps implemented by an electronic system (10) for measuring the energy behavior of the transport network comprising a memory (213) and a processor (214):
- the collection of environmental data captured by the sensor(s) of the capture unit during the movement of vehicles (1) on their trajectory, with each environmental data being associated with its respective capture time,;
- the collection of data characterizing the dynamic state of vehicles (1) during the movement of vehicles on their trajectory;
- determination of electrical consumption values of the vehicles (1) at sampling times
- the calculation of at least one indicator of energy performance indicator of the network according to said determined electrical values;
where the electrical consumption values at said sampling times of at least some of said vehicles (1) are determined by an algorithmic model, said algorithmic model being stored in the memory (213) of the electronic measuring system (10) and executed on the processor (214) of said system, the electrical consumption values at said sampling times of each of said vehicles (1) being calculated by the algorithmic model based on the captured environmental data and the associated capture times collected during the travel of the vehicle along said trajectory, as well as data characterizing the dynamic state of the vehicle on the predefined trajectory at the sampling times, the electrical consumption values of a substation (2) being determined at said sampling times during the passage of a vehicle (1) while solely supplied by said substation (2); electrical consumption values of said vehicle being deduced from said determined electrical consumption values of a substation and the validity of the algorithmic model being evaluated by comparing said deduced electrical consumption values of said vehicle with said determined electrical consumption values of said vehicles.

2. - The method for measuring the energy behavior of a transport network according to claim 1, wherein said algorithmic model has been obtained at the end of an automatic learning phase as a function of training data sets including, for sampling times, on each of the trajectories, electrical consumption values of at least one vehicle actually measured by a set (310) of electrical consumption sensor(s) on-board the vehicle, measurements of environmental data, and data characterizing the dynamic state of the vehicle.

3. - The method of measuring the energy behavior of a transportation network according to claim 1 or 2, wherein said vehicles (1) comprise a spatial and time stamp unit (314), and the electrical consumption values at said sampling times of each of these vehicles (1) are calculated by the algorithmic model based on the captured environmental data and the associated capture times and locations provided by the stamping unit (314) and collected during the travel of the vehicle along said trajectory, as well as data characterizing the dynamic state of the vehicle along the predefined trajectory at the sampling times and locations.

4. - The method for measuring the energy behavior of a transport network according to claim 3, wherein said algorithmic model has been obtained at the end of an automatic learning phase as a function of training data sets including, for sampling times and locations, on each of the trajectories, electrical consumption values of at least one vehicle actually measured by a set of electrical consumption sensor(s) on-board the vehicle, measurements of environmental data, and data characterizing the dynamic state of the vehicle.

5. - The method for measuring the energy behavior of a transport network according to any one of the preceding claims, wherein the data characterizing the dynamic state of the vehicle (1) over the predefined trajectory comprises one or a plurality of elements amongst of the vehicle location, its speed, its acceleration, the slope of the trajectory, the curve of the trajectory.

6. - The method for measuring the energy behavior of a transmission network according to any of the preceding claims, wherein the electrical consumption values of the substations (2) are also determined at said same sampling times, and an overall simulation model of the network is determined by learning as a function of said determined electrical consumption values of the substations, said algorithmic model representing the energy behavior of the vehicles and a time schedule model of the vehicles.

7. - A computer program including software instructions which, when executed by a computer, implement a method according to any of the preceding claims.

8. - An electronic system (10) for measuring the energy behavior of a transport network comprising a set of substation(s) (2) for supplying electrical energy and a fleet of vehicles (1) electrically supplied by said substations, said vehicles following predefined trajectories and comprising a unit (316) for capturing environmental data comprising at least one sensor amongst a temperature sensor, a humidity sensor and a CO₂ sensor, the system being suitable for collecting environmental data captured by the sensor(s) of the capture unit during the travel of the vehicles (1) along their trajectory, with each environmental data being associated with its respective capture time, to collect data characterizing a dynamic state of the vehicles (1) during the travel of the vehicles along their trajectory;
said system being further suitable for determining electrical consumption values of the vehicles (1) at sampling times and to calculate at least one indicator of energy performance of the network according to said determined electrical values;
said system further including a memory (213) storing an algorithmic model and a processor (214) in that same is suitable for determining the electrical consumption values at said sampling times of at least some of said vehicles (1) by executing said algorithmic model on said processor, the electrical consumption values at said sampling times of each of said vehicles (1) being calculated by the algorithmic model according to the captured environmental data and the associated capture times collected during the travel of the vehicle on said trajectory, as well as data characterizing the dynamic state of the vehicle on the predefined trajectory at the sampling times, said system being, furthermore, suitable for determining the electrical consumption values of a substation at said sampling times during the passage of a vehicle while solely supplied by said substation; electrical consumption values of said vehicle being deduced from said determined substation electrical consumption values and the processor being suitable for evaluating the validity of the algorithmic model by comparing said deduced electrical consumption values of said vehicle with said determined electrical consumption values of said vehicles.

9. - The electronic system (10) for measuring the energy behavior of a transport network according to claim 8, wherein said algorithmic model has been obtained at the end of an automatic learning phase as a function of training data sets including, for sampling times, on each of the trajectories, electrical consumption values of at least one vehicle actually measured by a set (310) of electrical consumption sensor(s) on-board the vehicle, measurements of environmental data, and data characterizing the dynamic state of the vehicle.
